# EUROPÄISCHE PATENTSCHRIFT

(11) **EP 0 535 424 B1**
(45) Veröffentlichungstag und Bekanntmachung des Hinweises auf die Patenterteilung: **04.12.1996**
(21) Anmeldenummer: 92115621.2
(22) Anmeldetag: 12.09.1992
(51) Int. Cl.: C09B 67/22, D06P 3/54, C09B 29/00, C09B 5/24

(54) **Blaue Farbstoffmischungen mit hoher Brillanz**
Blue dye mixtures with a high brilliancy
Mélanges de colorants bleus avec une haute brillance

(30) Priorität: 26.09.1991 DE 4132075
(43) Veröffentlichungstag der Anmeldung: 07.04.1993
(73) Patentinhaber: BASF Aktiengesellschaft, 67063 Ludwigshafen (DE)
(72) Erfinder: Degen, Helmut, W-6710 Frankenthal (DE); Lange, Arno, Dr., W-6702 Bad Duerkheim (DE); Gruettner-Merten, Sabine, Dr., W-6704 Mutterstadt (DE); Reichelt, Helmut, Dr., W-6730 Neustadt (DE)

(56) Entgegenhaltungen:
- EP-A- 0 311 910
- FR-A- 1 594 324
- CHEMICAL ABSTRACTS, vol. 89, no. 9, 30. Oktober 1978, Columbus, Ohio, US; abstract no. 148078q, Seite 60

## Beschreibung

Die vorliegende Erfindung betrifft neue blaue Farbstoffmischungen, enthaltend 30 bis 95 Gew.-%, bezogen auf das Gesamtgewicht der Farbstoffe, eines oder mehrerer Anthrachinonfarbstoffe der Formel I 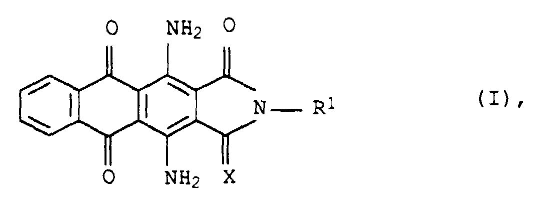 in der
- R¹: C₁-C₁₀-Alkyl, das gegebenenfalls durch 1 oder 2 Sauerstoffatome in Etherfunktion unterbrochen ist und durch C₁-C₈-Alkoxycarbonyl, Hydroxy oder Phenyl substituiert sein kann, und
- X: Sauerstoff oder Imino bedeuten,
sowie 5 bis 70 Gew.-%, bezogen auf das Gesamtgewicht der Farbstoffe, eines oder mehrerer Thiophenazofarbstoffe der Formel II 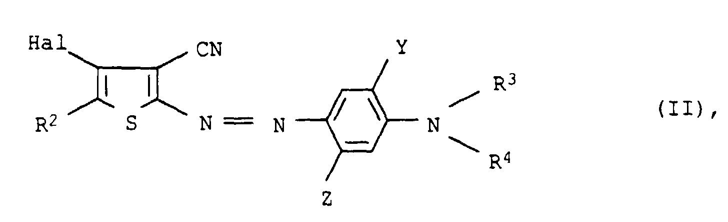 in der
- Hal: Chlor oder Brom
- R²: Formyl oder Cyano,
- Y: Wasserstoff oder C₁-C₄-Alkoxy,
- Z: C₁-C₄-Alkyl, C₁-C₄-Alkoxy, gegebenenfalls durch Halogen, Cyano, Hydroxy, C₁-C₄-Alkoxy oder C₁-C₄-Alkanoyloxy substituiertes C₁-C₈-Alkanoylamino oder C₃-C₄-Alkenoylamino und
- R³ und R⁴: gleich oder verschieden sind und unabhängig voneinander jeweils Wasserstoff oder C₁-C₆-Alkyl, das gegebenenfalls durch Hydroxy, C₁-C₄-Alkoxy oder C₁-C₄-Alkanoyloxy substituiert ist, bedeuten,
sowie deren Verwendung zum Färben oder Bedrucken von Polyestergeweben.

Es ist bekannt, daß Anthrachinonfarbstoffe, z.B. C.I. Disperse Blue 60 (61 104) oder C.I. Disperse Blue 87, eine geringere Farbstärke sowie ein schlechteres Aufbauvermögen als Azofarbstoffe aufweisen.

Trotz dieser Nachteile sind blaue Anthrachinonfarbstoffe vom Typ C.I. Disperse Blue 60 in der Praxis bislang nicht durch Azofarbstoffe abgelöst worden. Dies liegt daran, daß die Brillanz dieser Anthrachinonfarbstoffe durch Azofarbstoffe nicht erreicht wird. Auch Mischungen solcher Anthrachinonfarbstoffe mit Azofarbstoffen sind trüber.

Zur Festlegung der Brillanz einer Färbung - und damit eines Farbstoffs - wird üblicherweise die Farbmetrik und die CIELAB-Formel (DIN 6174) verwendet. In den grünstichig bis neutral blauen Farbtönen wird ein Farbstoff als brillant bezeichnet, dessen Färbungen einen Chroma-Wert aufweisen, der über 39 liegt.

Aufgabe der vorliegenden Erfindung war es nun, neue Farbstoffmischungen aus Anthrachinon- und Azofarbstoffen bereitzustellen, die sich zum Färben oder Bedrucken von Polyestern im Blaubereich eignen, wobei die Mischungen praktisch gleiche Brillanz aufweisen sollten wie die Anthrachinonfarbstoffe allein.

Demgemäß wurden die eingangs näher bezeichneten blauen Farbstoffmischungen gefunden.

Alle in den obengenannten Formeln I und II auftretenden Alkylgruppen können sowohl geradkettig als auch verzweigt sein.

Wenn die Alkylreste Substituenten tragen, so sind sie in der Regel 1- oder 2-fach substituiert.

Reste R¹ sind z.B. Methyl, Ethyl, Propyl, Isopropyl, Butyl, Isobutyl, sec-Butyl, tert-Butyl, Pentyl, Isobutyl, Neopentyl, tert-Pentyl, Hexyl, 2-Methylpentyl, Heptyl, 2-Methylhexyl, Octyl, 2-Ethylhexyl, Nonyl, Decyl, 2-Methoxyethyl, 2-Ethoxyethyl, 2-Propoxyethyl, 2-Isoprooxyethyl, 2-Butoxyethyl, 2- oder 3-Methoxypropyl, 2- oder 3-Ethoxypropyl, 2- oder 3-Propoxypropyl, 2- oder 3-Isoprooxypropyl, 2- oder 3-Butoxypropyl, 2- oder 4-Methoxybutyl, 2- oder Ethoxybutyl, 3,6-Dioxaheptyl, 3,6-Dioxaoctyl, 4,7-Dioxaoctyl, 4,7-Dioxanonyl, 2-Hydroxyethyl, 2 oder 3-Hydroxypropyl, 2- oder 4-Hydroxybutyl, 2-Methoxycarboylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Isopropoxycarbonylpropyl, 2- oder 3-Butoxycarbonylpropyl, 2- oder 4-Methoxycarbonylbutyl, 2- oder 4-Ethoxycarbonylbutyl, Benzyl, 1- oder 2-Phenylethyl, 3-Phenylproyl oder 2,3-Diphenylpropyl.

Reste Y und Z in Formel II sind z.B. Methoxy, Ethoxy, Propoxy, Isopropoxy, Butoxy, Isobutoxy oder sec-Butoxy.

Reste Z sind, wie auch die Reste R³ und R⁴, weiterhin z.B. Methyl, Ethyl, Propyl, Isopropyl, Butyl, Isobutyl oder sec-Butyl.

Reste Z sind weiterhin z.B. Acetylamino, Propionylamino, Butyrylamino, Isobutyrylamino, 2-Ethylhexanoylamino, Methoxyacetylamino, Ethoxyacetylamino, 2- oder 3-Methoxypropionylamino, Chloracetylamino, Cyanoacetylamino, Hydroxyacetylamino, Acetyloxyacetylamino, Acroylamino oder Methacroylamino.

Reste R³ und R⁴ sind weiterhin z.B. Pentyl, Isopentyl, Neopentyl, Hexyl, 2-Hydroxyethyl, 2- oder 3-Hydroxypropyl, 2- oder 4-Hydroxybutyl, 2-Methoxyethyl, 2-Ethoxyethyl, 2- oder 3-Methoxypropyl, 2- oder 3-Ethoxypropyl, 2- oder 4-Methoxybutyl, 2- oder 4-Ethoxybutyl, 2-Acetyloxyethyl oder 2- oder 3-Acetyloxypropyl.

Bevorzugt sind solche Farbstoffmischungen, die einen oder mehrere Farbstoffe der Formel I, in der
- R¹: C₁-C₈-Alkyl, oder insbesondere C₁-C₈-Alkyl, das durch 1 oder 2 Sauerstoffatome in Etherfunktion unterbrochen ist, und
- X: Sauerstoff bedeuten,
sowie einen oder mehrere Farbstoffe der Formel II, in der
- Hal: Chlor,
- R²: Formyl oder Cyano,
- Y: Wasserstoff,
- Z: C₁-C₄-Alkyl oder gegebenenfalls durch Methoxy oder Ethoxy substiutiertes Acetylamino oder Propionylamino und
- R³ und R⁴: unabhängig voneinander jeweils C₁-C₄-Alkyl, das gegebenenfalls durch Hydroxy oder C₁-C₄-Alkoxy substituiert ist, bedeuten, enthalten.

Bevorzugt sind weiterhin Farbstoffmischungen, die 50 bis 85 Gew.-%, bezogen auf das Gesamtgewicht der Farbstoffe, eines oder mehrerer Anthrachinonfarbstoffe der Formel I sowie 15 bis 50 bis Gew.-%, bezogen auf das Gesamtgewicht der Farbstoffe, eines oder mehrere Thiophenazofarbstoffe der Formel II enthalten.

Besonders bevorzugt sind Farbstoffmischungen, die 60 bis 80 Gew.-%, bezogen auf das Gesamtgewicht der Farbstoffe, eines oder mehrerer Anthrachinonfarbstoffe der Formel I sowie 20 bis 40 Gew.-%, bezogen auf das Gesamtgewicht der Farbstoffe, eines oder mehrerer Thiophenazofarbstoffe der Formel II enthalten.

Von besonderer Bedeutung sind Farbstoffmischungen, die einen oder zwei Anthrachinonfarbstoffe der Formel I und zwei Thiophenazofarbstoffe der Formel II enthalten.

Bei den Farbstoffen der Formel I und II handelt es sich im allgemeinen um bekannte Farbstoffe. Farbstoffe der Formel I sind z.B. in der US-A-2 628 963, US-A-3 835 154, DE-B-1 266 425 oder DE-A-2 016 794 beschrieben. Farbstoffe der Formel II sind z.B. aus der EP-A-201 896 bekannt.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Dispergiermittel, zugesetzt werden. Es ist auch möglich, bereits fertige Farbstoffpräparationen der jeweiligen Partner oder fertige Farbstoffpräparationen mit reinen Farbstoffen abzumischen.

Die neuen Farbstoffmischungen eignen sich zum Färben oder Bedrucken z.B. von Celluloseacetat oder insbesondere von Polyestergeweben. Man erhält Ausfärbungen oder Drucke in blauem Farbton. Die Färbe- und Druckverfahren sind an sich bekannt. Nähere Einzelheiten können auch den Beispielen entnommen werden.

Überraschend ist, das die erfindungsgemäßen Farbstoffmischungen die gleiche, teilweise sogar eine höhere Brillanz aufweisen als die Anthrachinonfarbstoffe allein. Die neuen Farbstoffmischungen weisen weiterhin das günstige Echtheitsprofil sowie das vorteilhafte färberische Verhalten der Anthrachinonfarbstoffe auf, wobei insbesondere die Lichtechtheit sowie die Reduktionsstabilität zu nennen sind. Gegenüber der reinen Anthrachinonfarbstoffen zeichnen sich die neuen Farbstoffmischungen durch eine höhere Ergiebigkeit sowie durch ein besseres Aufbauvermögen aus.

Die folgenden Beispiele sollen die Erfindung näher erläutern.

### Färbevorschrift

10 g Polyestergewebe werden bei einer Temperatur von 50°C in 200 ml einer Färbeflotte gegeben, die Q Gew.-%, bezogen auf das Polyestergewebe, einer oder mehrerer Farbstoffpräparationen enthält und deren pH-Wert mittels Essigsäure auf 4,5 eingestellt ist. Man behandelt 5 Minuten bei 50°C, steigert dann die Temperatur der Flotte innerhalb von 30 Minuten auf 130°C, hält 60 Minuten bei dieser Temperatur und läßt dann innerhalb von 20 Minuten auf 60°C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65°C behandelt. Schließlich wird das Gewebe gespült, mit verdünnter Essigsäure neutralisiert, nochmals gespült und getrocknet.

Die obengenannten Farbstoffpräparationen enthalten im Falle der Anthrachinonfarbstoffe jeweils 22,5 Gew.-% und im Falle der Azofarbstoffe jeweils 40 Gew.-% an Farbstoff, jeweils bezogen auf das Gewicht der Präparation.

Die in den folgenden Beispielen 1 bis 3 beschriebenen Färbungen weisen jeweils gleiche Farbtiefe auf.

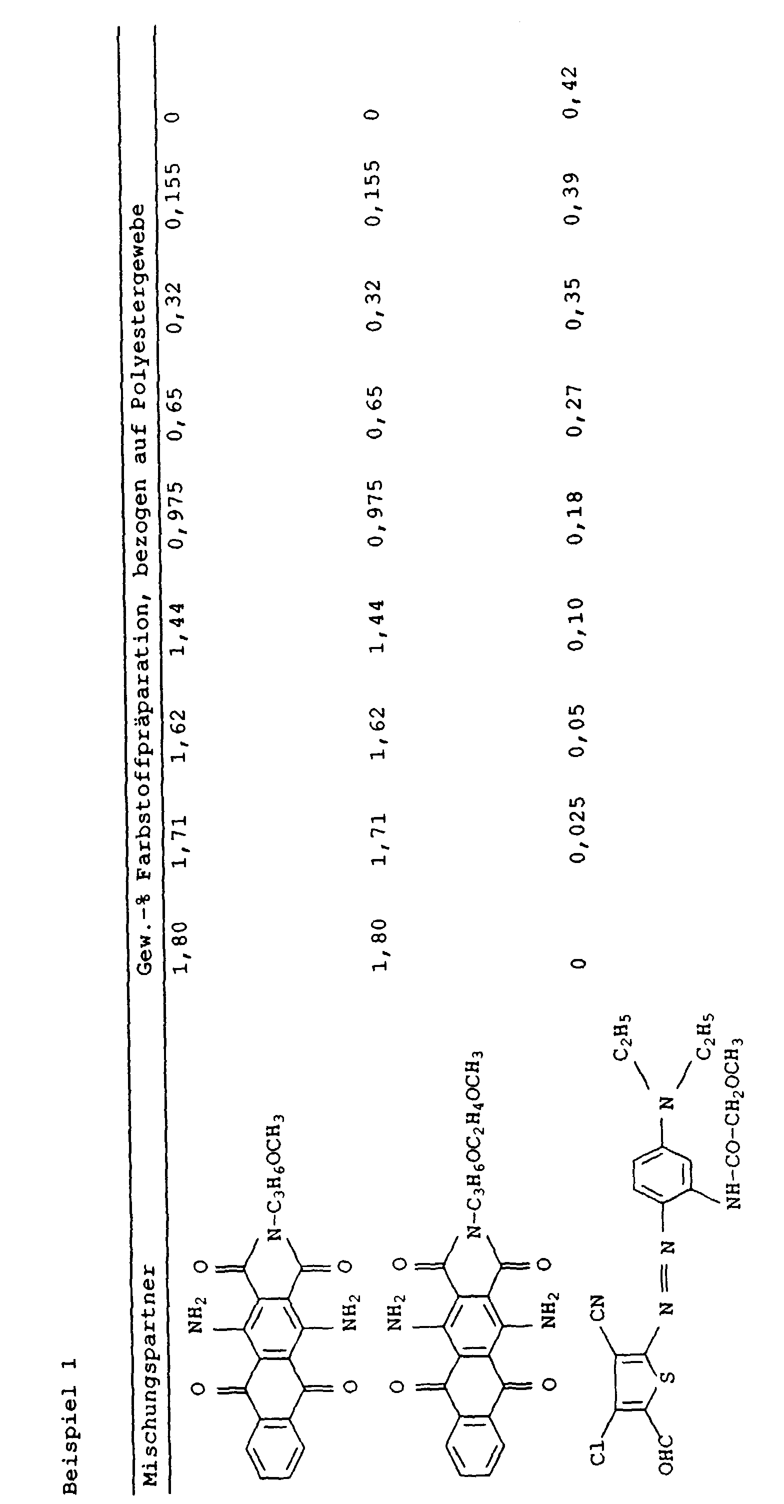

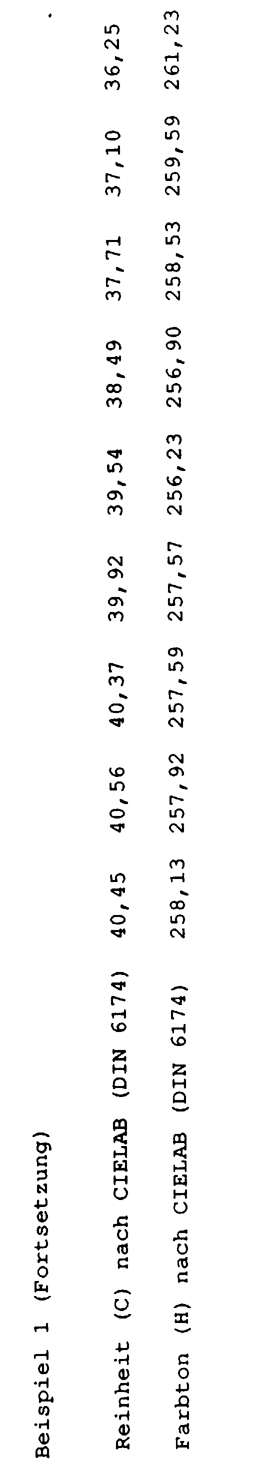

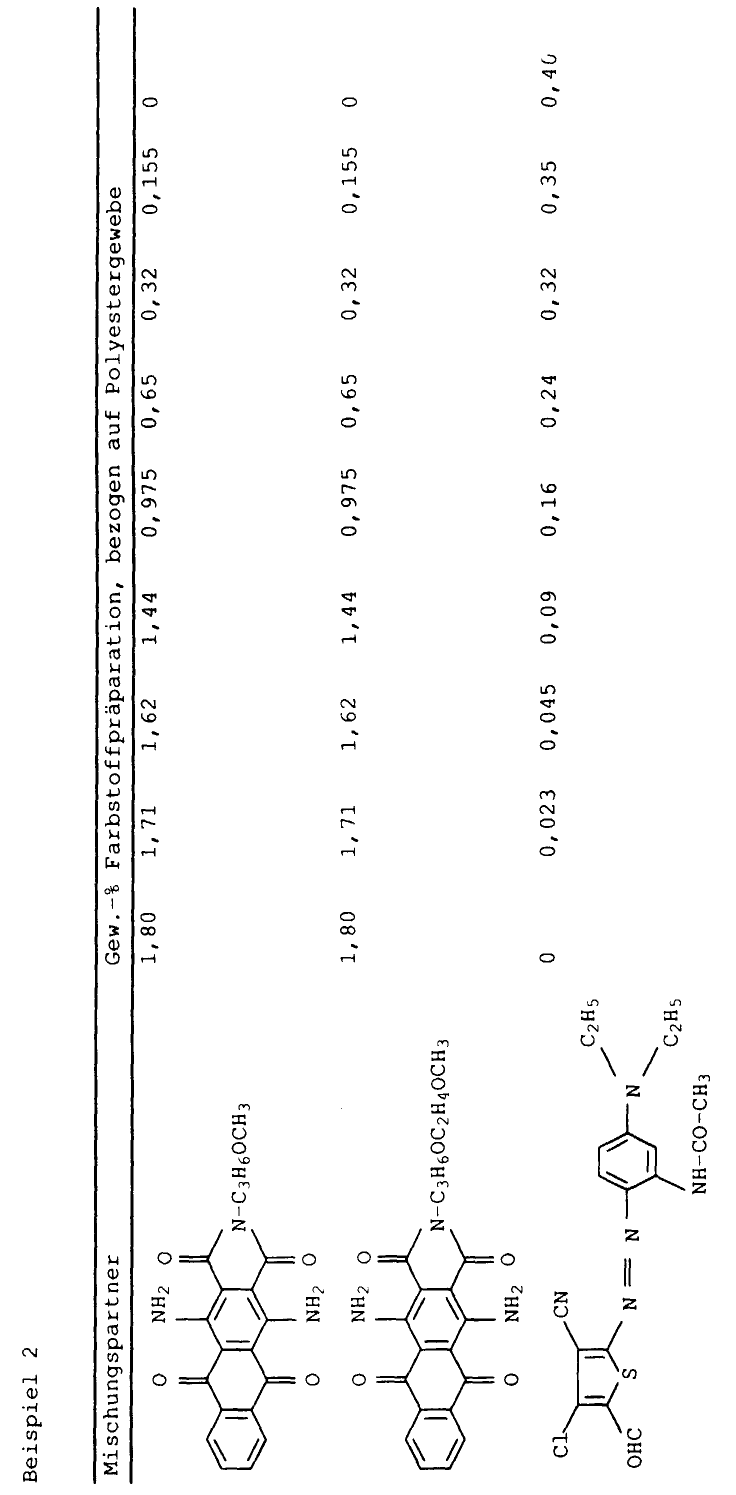

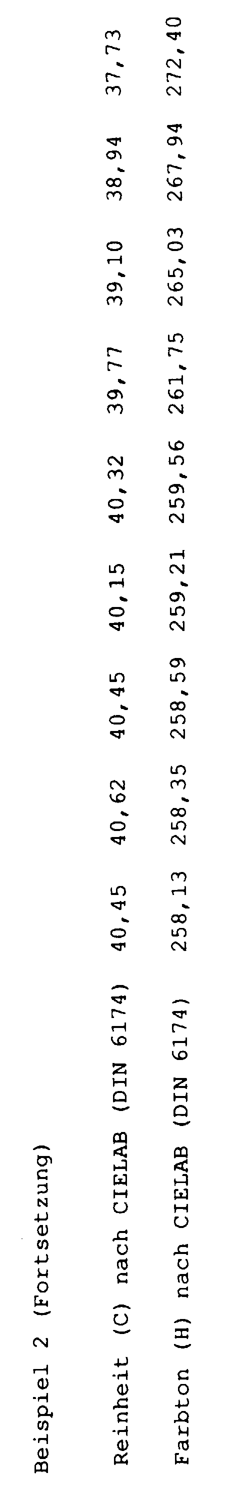

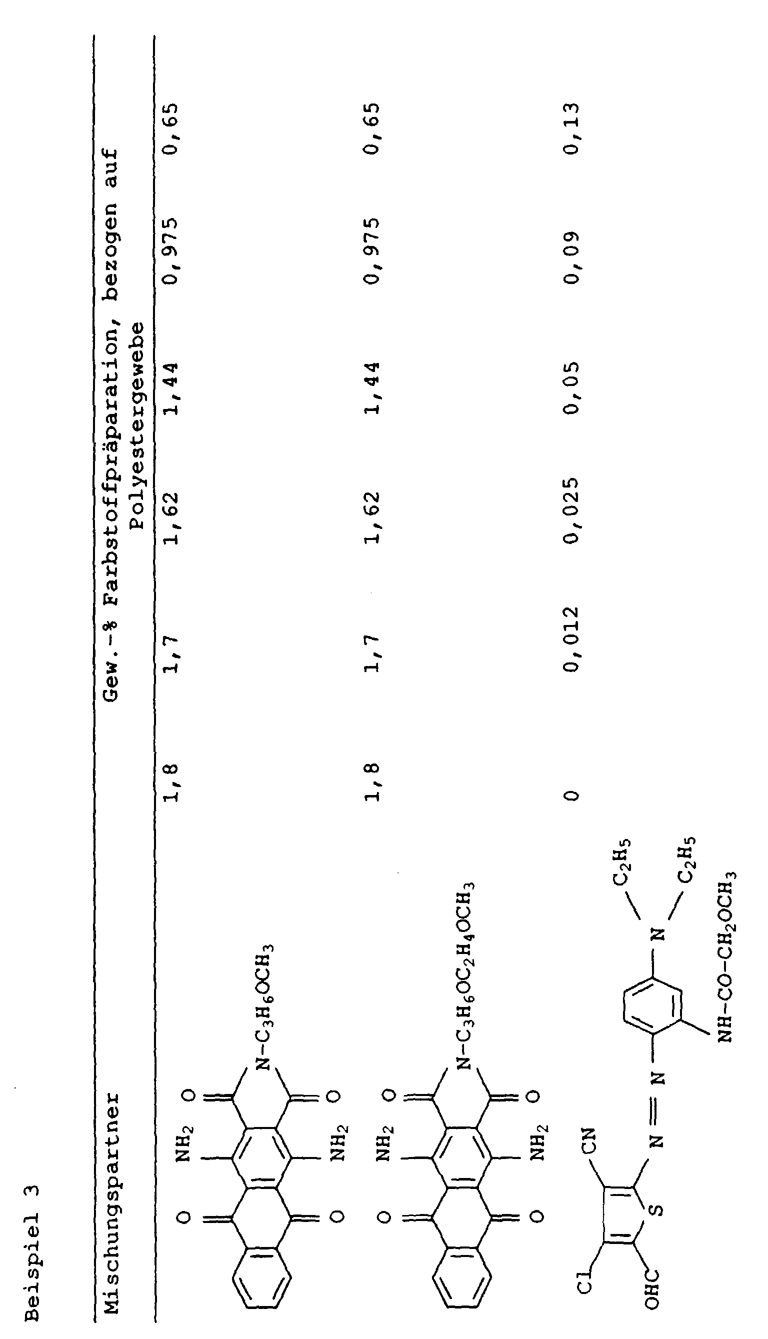

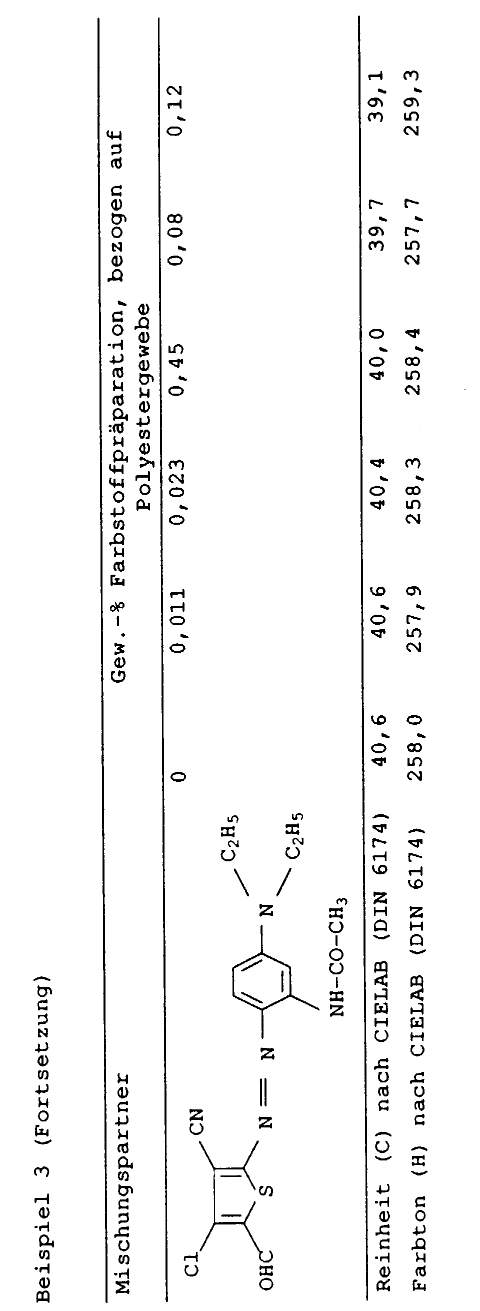

Zu ähnlich günstigen Mischungen gelangt man, wenn man die in den folgenden Tabellen 1 und 2 aufgeführten Farbstoffe anwendet.

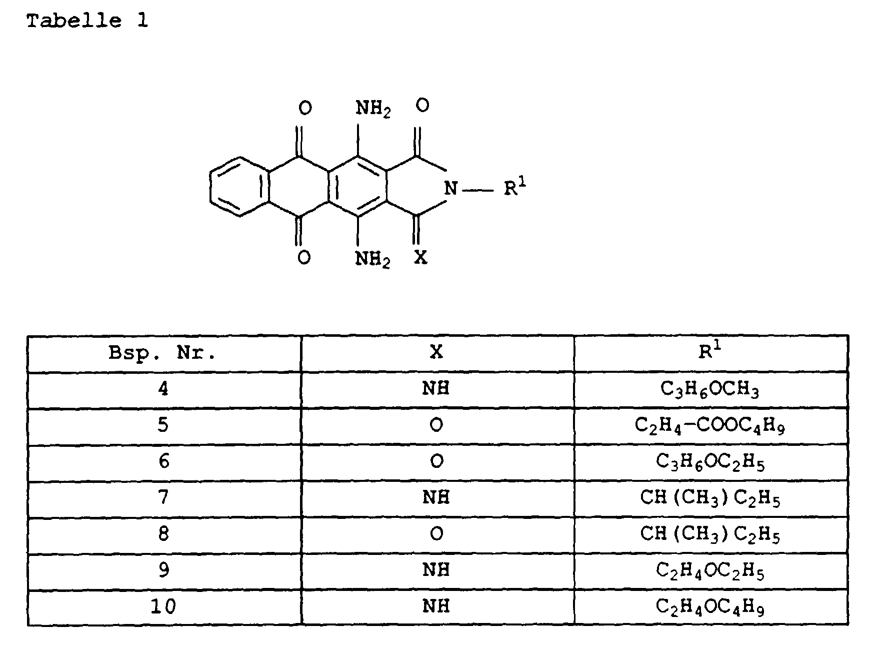

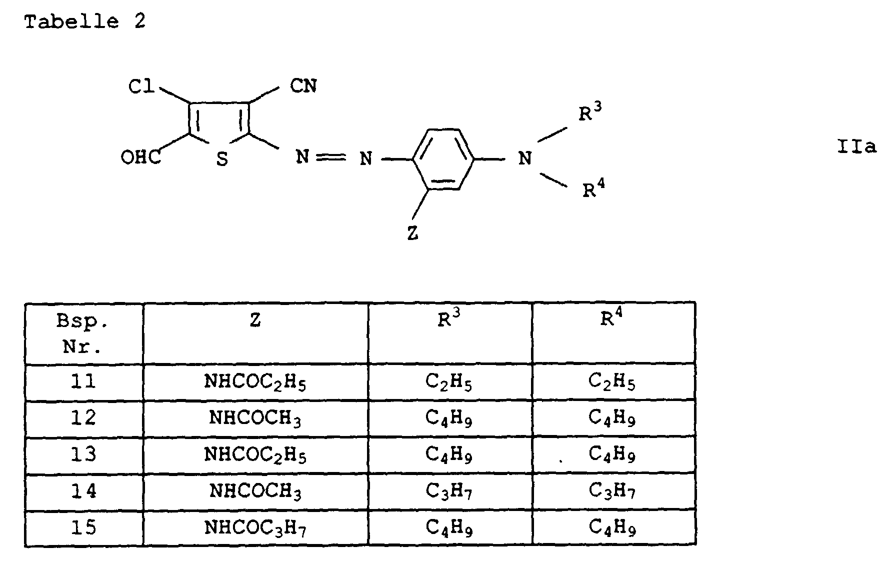

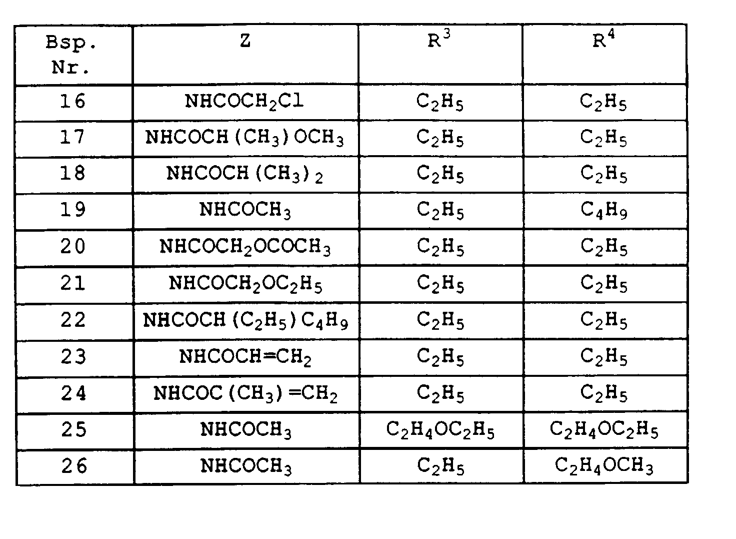

## Patentansprüche

1. Blaue Farbstoffmischungen, enthaltend 30 bis 95 Gew.-%, bezogen auf das Gesamtgewicht der Farbstoffe, eines oder mehrerer Anthrachinonfarbstoffe der Formel I 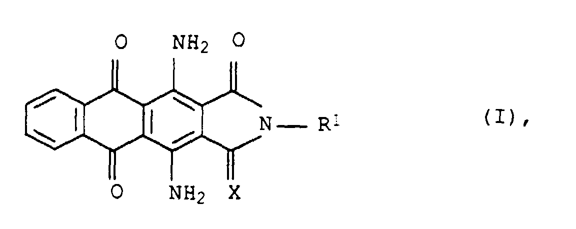 in der
R¹ C₁-C₁₀-Alkyl, das gegebenenfalls durch 1 oder 2 Sauerstoffatome in Etherfunktion unterbrochen ist und durch C₁-C₈-Alkoxycarbonyl, Hydroxy oder Phenyl substituiert sein kann, und
X Sauerstoff oder Imino bedeuten,
sowie 5 bis 70 Gew.-%, bezogen auf das Gesamtgewicht der Farbstoffe, eines oder mehrerer Thiophenazofarbstoffe der Formel II 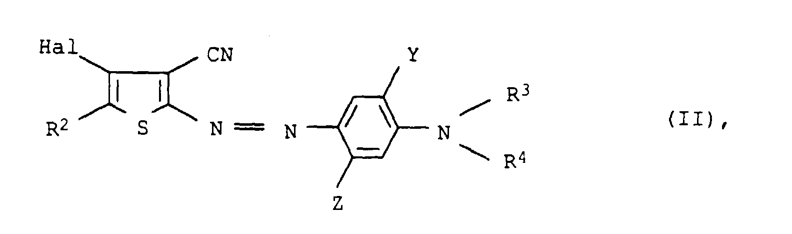 in der
Hal Chlor oder Brom
R² Formyl oder Cyano,
Y Wasserstoff oder C₁-C₄-Alkoxy,
Z C₁-C₄-Alkyl, C₁-C₄-Alkoxy, gegebenenfalls durch Halogen, Cyano, Hydroxy, C₁-C₄-Alkoxy oder C₁-C₄-Alkanoyloxy substituiertes C₁-C₈-Alkanoylamino oder C₃-C₄-Alkenoylamino und
R³ und R⁴ gleich oder verschieden sind und unabhängig voneinander jeweils Wasserstoff oder C₁-C₆-Alkyl, das gegebenenfalls durch Hydroxy, C₁-C₄-Alkoxy oder C₁-C₄-Alkanoyloxy substituiert ist, bedeuten.

2. Blaue Farbstoffmischungen nach Anspruch 1, enthaltend 50 bis 85 Gew.-%, bezogen auf das Gesamtgewicht der Farbstoffe, eines oder mehrerer Anthrachinonfarbstoffe der Formel I sowie 15 bis 50 Gew.-%, bezogen auf das Gesamtgewicht der Farbstoffe, eines oder mehrerer Thiophenazofarbstoffe der Formel II.

3. Verwendung der blauen Farbstoffmischungen gemäß Anspruch 1 zum Färben oder Bedrucken von Polyestergeweben.

## Claims

1. A blue dye mixture containing from 30 to 95% by weight, based on the total weight of the dyes, of one or more anthraquinone dyes of the formula I 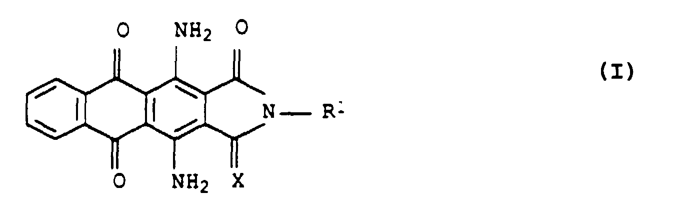 where
R¹ is C₁-C₁₀-alkyl optionally interrupted by 1 or 2 oxygen atoms in ether function and optionally substituted by C₁-C₈-alkoxycarbonyl, hydroxyl or phenyl, and
X is oxygen or imino,
and also from 5 to 70% by weight, based on the total weight of the dyes, of one or more thiopheneazo dyes of the formula II 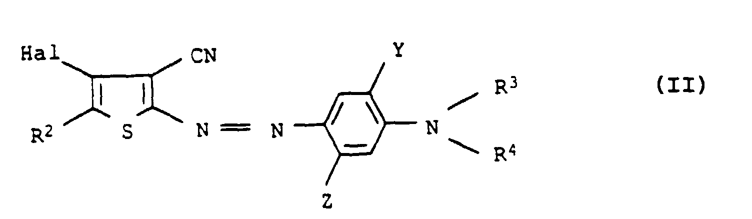 where
Hal is chlorine or bromine,
R² is formyl or cyano,
Y is hydrogen or C₁-C₄-alkoxy,
Z is C₁-C₄-alkyl, C₁-C₄-alkoxy, optionally halogen-, cyano-, hydroxyl-, C₁-C₄-alkoxy- or C₁-C₄-alkanoyloxy-substituted C₁-C₈-alkanoylamino or C₃-C₄-alkenoylamino, and
R³ and R⁴ are identical or different and each is independently of the other hydrogen or C₁-C₆-alkyl optionally substituted by hydroxyl, C₁-C₄-alkoxy or C₁-C₄-alkanoyloxy.

2. A blue dye mixture as claimed in claim 1, containing from 50 to 85% by weight, based on the total weight of the dyes, of one or more anthraquinone dyes of the formula I and also from 15 to 50% by weight, based on the total weight of the dyes, of one or more thiopheneazo dyes of the formula II.

3. The use of a blue dye mixture as claimed in claim 1 for dyeing or printing polyester fabrics.

## Revendications

1. Mélanges de colorants bleus, contenant 30 à 95% en poids, par rapport au poids total des colorants, d'un ou de plusieurs colorants de la famille des anthraquinones de formule I 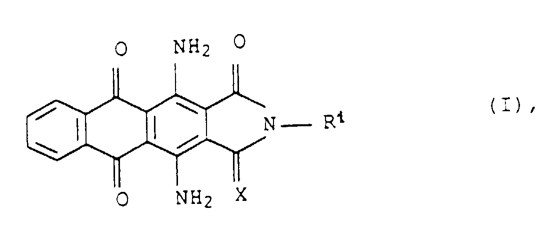 dans laquelle
R¹ représente un groupement alkyle en C₁-C₁₀ qui est éventuellement interrompu par 1 ou 2 atomes d'oxygène en fonction éther et peut être substitué par un reste (alcoxy en C₁-C₈)carbonyle, hydroxy ou phényle, et
X représente un atome d'oxygène ou un reste imino,
ainsi que 5 à 70% en poids, par rapport au poids total des colorants, d'un ou de plusieurs colorants thiophènazoïques de formule II 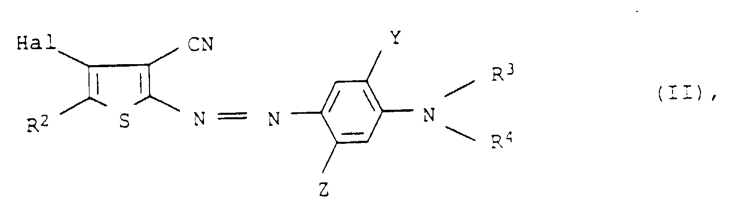 dans laquelle
Hal représente un atome de chlore ou de brome,
R² représente un groupement formyle ou cyano,
Y représente un atome d'hydrogène ou un groupement alcoxy en C₁-C₄,
Z représente un groupement alkyle en C₁-C₄, alcoxy en C₁-C₄, alcanoylamino en C₁-C₈ ou alcanoylamino en C₃-C₄ éventuellement substitué par un atome d'halogène ou un groupement cyano, hydroxy, alcoxy en C₁-C₄ ou alcanoyloxy en C₁-C₄, et
R³ et R⁴ sont identiques ou différents et représentent chacun, indépendamment l'un de l'autre, un atome d'hydrogène ou un groupement alkyle en C₁-C₆ qui est éventuellement substitué par un groupement hydroxy, alcoxy en C₁-C₄ ou alcanoyloxy en C₁-C₄.

2. Mélanges de colorants bleus selon la revendication 1, contenant 50 à 85% en poids, par rapport au poids total des colorants, d'un ou de plusieurs colorants de la famille des anthraquinones de formule I, ainsi que 15 à 50% en poids, par rapport au poids total des colorants, d'un ou de plusieurs colorants thiaphènazoïquee de formule II.

3. Utilisation des mélanges de colorants bleus selon la revendication 1 pour la teinture ou l'impression de tissus de polyester.
